# EUROPÄISCHE PATENTSCHRIFT

(11) **EP 1 269 771 B1**
(45) Veröffentlichungstag und Bekanntmachung des Hinweises auf die Patenterteilung: **13.05.2009**
(21) Anmeldenummer: 01929275.4
(22) Anmeldetag: 29.03.2001
(51) Int. Cl.: H04W 48/18

(54) **VERFAHREN UND SYSTEM ZUR PUNKTUELLEN STEUERUNG DER NETZAUSWAHL IN EINEM VON MINDESTENS ZWEI MOBILKOMMUNIKATIONSNETZEN VERSORGTEN GEBIET**
METHOD AND DEVICE FOR SELECTIVELY CONTROLLING NETWORK SELECTION IN AN AREA COVERED BY AT LEAST TWO MOBILE COMMUNICATION NETWORKS
PROCEDE ET DISPOSITIF POUR COMMANDER PONCTUELLEMENT LA SELECTION DE RESEAU DANS UNE ZONE COUVERTE PAR AU MOINS DEUX RESEAUX DE COMMUNICATION MOBILE

(30) Priorität: 31.03.2000 DE 10016034; 12.01.2001 DE 10101509
(43) Veröffentlichungstag der Anmeldung: 02.01.2003
(73) Patentinhaber: T-Mobile Deutschland GmbH, 53227 Bonn (DE)
(72) Erfinder: HOCHSCHERFF, Andreas, 53129 Bonn (DE); LJUNGSTRÖM, Patrik, 53639 Königswinter (DE); MOHRS, Walter, 53123 Bonn (DE); SÄNGER, Georg, 53545 Linz (DE)
(74) Vertreter: Riebling, Peter
(86) Internationale Anmeldenummer: PCT/DE2001/001195
(87) Internationale Veröffentlichungsnummer: WO 2001/076272

(56) Entgegenhaltungen:
- EP-A- 0 888 025
- WO-A-97/30561
- WO-A-98/39940
- WO-A-98/42151
- WO-A-99/49690
- GB-A- 2 315 193
- US-A- 5 761 618
- US-A- 5 920 815

## Beschreibung

Die Erfindung betrifft ein Verfahren und ein System zur punktuellen Steuerung der Netzauswahl in einem von mindestens zwei Mobilkommunikatiönsnetzen versorgten Gebiet.

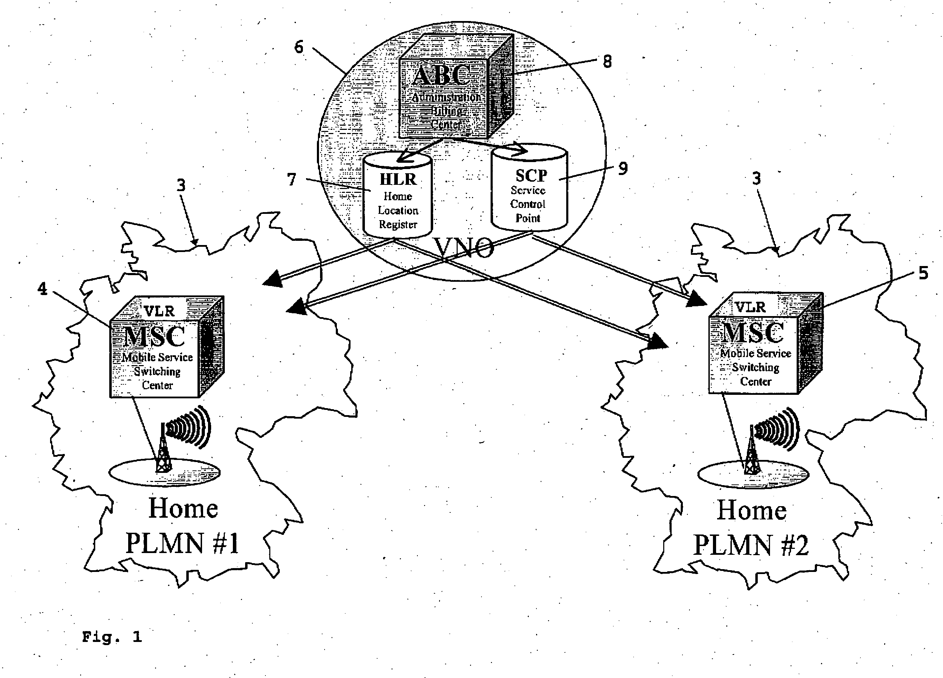

Zur Zeit findet in Europa eine verstärkte Diskussion zu der Thematik Virtual Network Operator (VNO) statt. Dabei wird unter anderem ein Modell diskutiert, in dem ein VNO mit eigenem Heimatregister (HLR) (und somit mit einem eigenen IMSI- und MSISDN-Bereich) sich auf die Netzzugangsleitungen von mindestens zwei Mobilfunknetzen (Public Land Mobile Netwörk, PLMN) stützt. Die sonstige GSM-Infrastruktur wie Basisstationen (BTSen), Basisstationssteuerungen (BSCs) und Mobilvermittlungsstellen / Besucherdateien (MSC/VLR) werden von den Mobilfunknetzbetreibern bereitgestellt. Der Zusammenhang ist in Figur 1 dargestellt. Es sind schematisch zwei Mobilfunknetze 1 und 2 dargestellt, die beide ein Versorgungsgebiet 3, beispielsweise die Bundesrepublik Deutschland oder zumindest Teile davon, abdecken. Für jedes der Mobilfunknetze 1, 2 ist jeweils symbolisch eine Mobilvermittlungsstelle 4 und 5 (MSC) als Teil der Mobilfunknetze dargestellt.

Der Virtual Network Operator 6 (VNO), der als eine Art Mobilfunkprovider auftritt, nutzt die Infrastruktur beider Mobilfunknetze 1 und 2, um seinen Kunden Mobilfunkdienste anzubieten. Die Teilnehmerdaten der Kunden werden zentral in einem Heimatregister 7 (HLR) des VNO 6 verwaltet. Die Abrechnung und Dienstesteuerung wird ebenfalls in entsprechenden Einrichtungen 8, 9 des VNO durchgeführt. Der Teilnehmer (Kunde des VNO) kann sich in beiden Mobilfunknetzen einbuchen, wobei die Steuerung der Netzauswahl durch den VNO 6 erfolgt und dieser den Mobilfunknetzen 1, 2 die notwendigen Teilnehmerdaten zur Verfügung stellt.

Aus Sicht des VNO ist das oben genannte Szenario vom besonderen Interesse, wenn er eine Möglichkeit zur punktuellen Steuerung der Netzauswahl für seine Teilnehmer zur Verfügung hat. Diese Möglichkeit wäre nämlich die Voraussetzung, um die Netzbetreiber preislich gegeneinander auszuspielen. Dieses "Ausspielen" liegt jedoch nicht im Interesse der betroffenen Netzbetreiber.

Die US 5 761 618 beschreibt ein Mobiltelefonsystem, bei dem die Mobiltelefone durch eine Übertragung von Daten über das Mobilfunksystem derart modifiziert werden, dass insbesondere beim Roaming eine automatische Auswahl des bevorzugten Service Providers bzw. Mobilfunknetzes erfolgt. Die einzelnen Mobilfunknetze werden anhand einer Systemidentifikation SID erkannt, die mit einer im Mobiltelefon gespeicherten Datenliste verglichen wird. Das in der Datenliste aufgeführte Mobilfunksystem mit höchster Priorität wird ausgewählt. Hierzu muss die Software des Mobiltelefons modifiziert bzw. regelmäßig eine Datenliste der "erlaubten" Serviceprovider in einen Speicher des Mobiltelefons geladen werden.

Ein ähnliches Verfahren ist in der WO 97 30 561 offenbart.

Die WO 98 42151 offenbart ein Verfahren zur Zuordnung einer individuellen sogenannten Heimatzone zu einer Mobilstation. Jeder Mobilstation wird mindestens eine Heimatzone oder kostenreduzierte Abrechnungszone zugeordnet. Innerhalb der Heimatzone werden von der Mobilstation genutzte Telekommunikationsdienste zu einem speziellen Tarif abgerechnet. Die Heimatzone ist im HLR des Mobilfunksystems gespeichert. Durch Vergleich des aktuellen Aufenthaltsorts der Mobilstation mit der gespeicherten Heimatzone wird festgestellt, ob sich die Mobilstation in der Heimatzone befindet. Dieses Verfahren wird nur innerhalb eines Mobilfunknetzes verwendet.

Das Dokument GB 2 315 193 offenbart ein privates Sub-Mobilfunknetz innerhalb eines öffentlichen Mobilfunknetzes. Das private Sub-Mobilfunknetz überdeckt eine Teilfläche des öffentlichen Mobilfunknetzes. Sowohl dem privaten Sub-Mobilfunknetz als auch dem öffentlichen Mobilfunknetz ist ein eigener Netzidentitätscode zugeordnet, anhand dessen das jeweilige Mobilfunknetz von einer Mobilstation identifiziert werden kann. Die Mobilstation kann sich in das ausgewählte Mobilfunknetz einbuchen, wobei im Netz geprüft wird, ob die Mobilstation dazu berechtigt ist.

Die WO 99 49690 befasst sich mit der Auswahl eines geeigneten Trägerdienstes, z.B. GPRS, durch eine Mobilstation. Eine Liste der verfügbaren Trägerdienste wird über Cell-Broadcast an die Mobilstation übertragen wo dann eine entsprechende Auswahl erfolgt. Eine Auswahl zwischen mehreren Mobilfunknetzen erfolgt nicht.

Zu erwähnen sind noch die Dokumente WO 98 39940 und US 5 920 815, die jedoch weiter ab vom Gegenstand der vorliegenden Anmeldung liegen.

In dem oben diskutierten Stand der Technik sind keine Lösungen angesprochen, um eine von einem VNO gesteuerte Netzauswahl zwischen mehreren unabhängigen Mobilfunknetzen zu vereinfachen.

Die Aufgabe der Erfindung besteht darin, ein Verfahren und ein System zur punktuellen Steuerung der Netzauswahl in einem von mindestens zwei Mobilkommunikationsnetzen versorgten Gebiet anzugeben, das ausschließlich auf Komponenten des VNO sowie auf offene Schnittstellen zu den Mobilfunknetzen basiert.

Diese Aufgabe wird durch die technische Lehre der unabhängigen Patentansprüche gelöst.

Vorteilhafte Ausführungsformen und Weiterbildungen der Erfindung sind Gegenstand der abhängigen Ansprüche.

Ein Ausführungsbeispiel der Erfindung wird nachfolgend anhand von Zeichnungsfiguren näher beschrieben. Aus den Zeichnungen und deren Beschreibung ergeben sich weitere Merkmale und Vorteile der Erfindung. Es zeigt:
- Figur 1:: schematische Darstellung der prinzipiellen Verknüpfung zwischen einem VNO und zwei Mobilkommunikationsnetzen;
- Figur 2:: schematische Darstellung einer Konfiguration zur Durchführung der Erfindung;
- Figur: 3: schematische Darstellung einer von einem Endgerät und SIM empfangenen Cell Broadcast Nachricht.

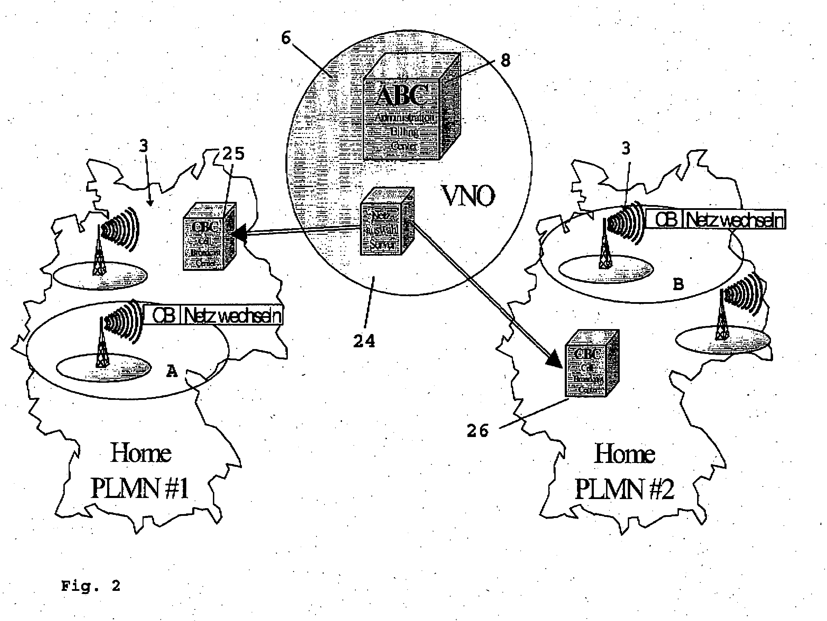

Ein Lösungsansatz der Erfindung gemäß Figur 2 bedient sich des SIM Application Toolkit (SAT)-Verfahrens. Dabei wird die SIM mittels Signalen eines Cell Broadcast Kanals gesteuert.

Stand der Technik zu SAT-Diensten und Cell Broadcast: Grundlage für die dynamische Netzbetreiberauswahl ist ein SAT-Dienst bei dem die SIM via einem Cell Broadcast Kanal per Download-Message gesteuert wird.

Der VNO mietet bei den beiden Mobilfunknetzbetreibern jeweils ein flächendeckenden Cell Broadcast Kanal (bzw. einen Teilkanal). In den SIM-Karten wird ein Dienst integriert der via dem CB-Kanal gesteuert wird.

Typischerweise bietet der Cell Broadcast-Dienst die Möglichkeit Informationen (Nachrichten) differenziert nach Gebieten (z.B. Telekommunikationsortsnetze), Posleitzahlenbereiche, Politische Regionen oder geographische Regionen (definiert durch Länge- und Breitengrade) auszusenden. Durch dieses gezielte Aussenden der Steuerkommandos kann die Applikation auf der SIM regional gesteuert werden.

Die Anwendung von SAT-Diensten und Cell Broadcast zur Problemlösung wird anhand der Fig. 2 und der folgenden Beschreibung erläutert.

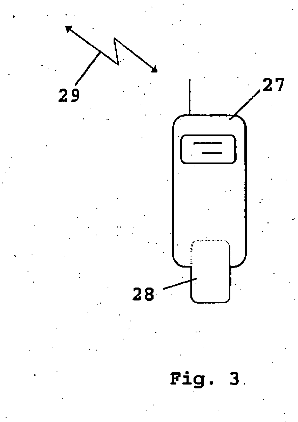

Durch einen Netzauswahl Server 24 im Bereich des VNO 6 wird via den Cell Broadcast Centern 25, 26 der beiden "Heimatnetze" 1 und 2 regional begrenzte Wechselnachrichten versandt. Dabei wird die Nachricht in der Region A des Netzes #1 verschickt, wenn zukünftig alle VNO-Kunden in der Region A das Netz #2 verwenden sollen. Durch die Verwendung einer s.g. CB-Download-Message wird die Nachricht bei Empfang im Endgerät 27 direkt an die SIM-Karte 28 weitergereicht, wie in Figur 3 dargestellt ist. Entsprechend wird die Nachricht in der Region B des Netzes #2 verschickt, wenn zukünftig alle VNO-Kunden in der Region B das Netz #1 verwenden sollen.

Die Applikation auf der SIM-Karte 28 führt bei Empfang der Wechselnachricht folgende Aktionen aus:
- Die Netz- bzw. Ortsinformationen der SIM-Karte 28 werden so manipuliert, dass die Karte "glaubt", dass sie sich zur Zeit im Netz #2 (d.h. das neue Netz) aufhält. Z.B. durch entsprechendes setzen des "last registered" Felds in der Location Information. Zusätzlich kann das bisherige Netz auch explizit verboten werden. Dies kann beispielsweise durch einen entsprechenden Eintrag in einer "ForbiddenPLMN" Liste erfolgen. Ein eventueller Eintrag des neuen Netzes in der ForbiddenPLMN Liste muss entfernt werden.
- Durch ein Reset der SIM-Karte wird seitens des Endgeräts 27 eine Netzsuche initiiert. Durch die manipulierten Netz- bzw. Ortsinformationen auf der Karte 28 führt dies automatisch zu einem Einbuchen in Netz #2. Da eventuell laufende Gespräche durch das Reset ausgelöst werden, ist das Gesprächsende abzuwarten bevor das Reset durchgeführt wird.

### Optimierung/Ergänzung:

Zur Verhinderung von Mißbrauch seitens Dritter (insbesondere der beiden Netzbetreiber #1 und #2) kann der CB-Kanal auf Applikationsebene (zwischen SIM-Karte 28 und Netzauswahlserver 24) verschlüsselt werden. Hierdurch kann die Authentizität der Wechselnachricht in der-SIM-Karte geprüft werden.

### Zeichnungslegende

- 1: Mobilkommunikationsnetz (PLMN)
- 2: Mobilkommunikationsnetz (PLMN)
- 3: Versorgungsgebiet
- 4: Mobilvermittlungsstelle (MSC)
- 5: Mobilvermittlungsstelle (MSC)
- 6: Virtual Network Operator (VNO)
- 7: Heimatregister (HLR)
- 8: Verwaltungs- und Abrechnungszentrum
- 9: Service Control Point

- 24: Netzauswahlserver
- 25: Cell Broadcast Center
- 26: Cell Broadcast Center
- 27: Endgerät
- 28: Subscriber Identity Module (SIM)
- 29: Cell Broadcast Kanal (Nachricht)

## Patentansprüche

1. Verfahren zur punktuellen Steuerung der Netzauswahl in einem von mindestens zwei Mobilkommunikationsnetzen versorgten Gebiet, **dadurch gekennzeichnet, dass** ein Wirkzusammenhang zwischen Informationen auf einem Teilnehmeridentifikationsmodul SIM (28) und Signalen eines Cell Broadcast Kanals hergestellt wird auf dem eine Wechselnachricht ausgesendet wird, die zur Netzauswahl verwendet wird, wobei die Netzauswahl durch eine zentrale Einrichtung VNO (6) erfolgt, indem Steuerkommandos in der Wechselnachricht ausgesendet werden, wobei die Wechselnachricht in einem mit dem Teilnehmeridentifikationsmodul SIM (28) betriebenen Endgerät (27) empfangen wird und den Wechsel des Teilnehmeridentifikationsmoduls SIM (28) von dem aktuellen Mobilfunknetz (1 bzw. 2) in das jeweils andere Mobilfunknetz (2 bzw. 1) bewirkt.

2. Verfahren nach Anspruch 1, **dadurch gekennzeichnet, dass** durch einen Netzauswahl-Server (24) im Bereich der VNO (6) via Cell Broadcast Centern (25, 26) der Mobilfunknetze (1, 2) regional begrenzte Wechselnachrichten versandt werden, durch die das Teilnehmeridentifikationsmodul SIM (28) eines Teilnehmers gesteuert wird.

3. Verfahren nach einem der Ansprüche 1 oder 2, **dadurch gekennzeichnet, dass** beim Empfang einer Wechselnachricht die Netz- bzw. Ortsinformationen des Teilnehmeridentifikationsmoduls SIM (28) so manipuliert werden, dass das Teilnehmeridentifikationsmodul SIM annimmt, dass es sich zur Zeit im anderen Mobilfunknetz aufhält.

4. Verfahren nach einem der Ansprüche 1-3, **dadurch gekennzeichnet, dass** beim Empfang einer Wechselnachricht ein Reset des Teilnehmeridentifikationsmoduls SIM erfolgt und seitens des Endgeräts (27) eine Netzsuche initiiert wird, wobei durch die in folge der Wechselnachricht manipulierten Netz- bzw. Ortsinformationen in dem Teilnehmeridentifikationsmodul SIM automatisch ein Einbuchen im anderen Mobilfunknetz erfolgt.

5. Verfahren nach einem der Ansprüche 1-4, **dadurch gekennzeichnet, dass** der Cell Broadcast-Kanal (29) auf Applikationsebene zwischen Teilnehmeridentifikationsmodul SIM und Netzauswahlserver (24) verschlüsselt wird.

6. System zur Durchführung des Verfahrens zur punktuellen Steuerung der Netzauswahl in einem von mindestens zwei Mobilkommunikationsnetzen versorgten Gebiet gemäß den Ansprüchen 1 bis 5, **dadurch gekennzeichnet, dass** Einrichtungen der mindestens zwei Mobilkommunikationsnetze (1, 2) mit mindestens einer Speichereinrichtung (7) zur Speicherung von teilnehmerspezifischen Daten zumindest zeitweise verbunden sind, wobei Mittel zum gezielten Ansteuern von zumindest Teilen mindestens eines der Mobilkommunikationsnetze (1 bzw. 2) vorhanden sind, wobei die Mittel zum Ansteuern Teil eines Virtual Network Operators VNO (6) sind oder von diesem bereitgestellt werden und durch den VNO (6) ausgelöste Cell Broadcast Nachrichten (29) umfassen.

7. System nach Anspruch 6, **dadurch gekennzeichnet, dass** die Speichereinrichtung ein Heimatregister HLR (7) des Virtual Network Operators (6) ist.

## Claims

1. Method for point control of network selection in a region supplied by at least two mobile communications networks, **characterised in that** an effective association is established between information on a subscriber identification module SIM (28) and signals of a cell broadcast channel on which a change message used for network selection is sent out, wherein the network selection ensues by means of a central device VNO (6) **in that** control commands are sent out in the change message, wherein the change message is received in a terminal device operated by the subscriber identification module SIM (28) and brings about the switch of the subscriber identification module SIM (28) from the current mobile communications network (1 or 2) into the other mobile communications network (2 or 1) in question.

2. Method according to claim 1, **characterised in that** by means of a network selection server (24) in the region of the VNO (6) via cell broadcast centres (25, 26) of the mobile communications networks (1, 2) regionally restricted change messages are dispatched through which the subscriber identification module SIM (28) of a subscriber is controlled.

3. Method according to one of claims 1 or 2, **characterised in that** on receipt of a change message the network or location information of the subscriber identification module SIM (28) is manipulated in such a way that the subscriber identification module SIM assumes that it is currently located in the other mobile communications network.

4. Method according to any of claims 1-3, **characterised in that** on receipt of a change message a reset of the subscriber identification module SIM ensues and the terminal device (27) initiates a network search, wherein due to the network or location information in the subscriber identification module SIM manipulated in consequence of the change message logging on to the other mobile communications network ensues automatically.

5. Method according to any of claims 1-4, **characterised in that** the cell broadcast channel (29) is encrypted at application level between the subscriber identification module SIM and the network selection server (24).

6. System for carrying out the method for point control of network selection in a region supplied by at least two mobile communications networks according to claims 1 to 5, **characterised in that** equipment in the at least two mobile communications networks (1, 2) is at least temporarily connected to at least one storage device (7) for storing subscriber-specific data, wherein means for the selective control of at least parts of at least one of the mobile communications networks (1 or 2) are present, wherein the control means are part of a virtual network operator VNO (6) or are provided by the latter and comprise cell broadcast messages (29) initiated by the VNO (6).

7. System according to claim 6, **characterised in that** the storage device is a home location register HLR (7) of the virtual network operator (6).

## Revendications

1. Procédé pour commander ponctuellement la sélection de réseau dans une zone couverte par au moins deux réseaux de communication mobile, **caractérisé en ce qu'**une relation active est créée entre des informations installées sur un module d'identification d'abonné SIM (28) et des signaux d'un canal de diffusion cellulaire sur lequel est émis un message de changement utilisé pour la sélection de réseau, la sélection de réseau se faisant à l'aide d'un dispositif central VNO (6) grâce au fait que des ordres de commande sont émis dans le message de changement, et ledit message de changement étant reçu dans un terminal (27) qui fonctionne avec le module d'identification d'abonné SIM (28), et provoquant le passage de celui-ci du réseau mobile actuel (1 ou 2) à l'autre réseau mobile (2 ou 1).

2. Procédé selon la revendication 1, **caractérisé en ce qu'**un serveur de sélection de réseau (24) situé dans la zone du VNO (6) envoie par l'intermédiaire de centres de diffusion cellulaire (25, 26) des réseaux mobiles (1, 2) des messages de changement limités régionalement grâce auxquels le module d'identification d'abonné SIM (28) d'un abonné est commandé.

3. Procédé selon la revendication 1 ou 2, **caractérisé en ce que** lors de la réception d'un message de changement, les informations de réseau ou les informations de position du module d'identification d'abonné SIM (28) sont manipulées de telle sorte que ledit module d'identification d'abonné SIM suppose qu'il se trouve actuellement dans l'autre réseau mobile.

4. Procédé selon l'une des revendications 1 à 3, **caractérisé en ce que** lors de la réception d'un message de changement, une remise à zéro du module d'identification d'abonné SIM a lieu et une recherche de réseau est lancée du côté du terminal (27), une connexion étant réalisée automatiquement dans l'autre réseau mobile grâce aux informations de réseau ou aux informations de position manipulées à la suite du message de changement.

5. Procédé selon l'une des revendications 1 à 4, **caractérisé en ce que** le canal de diffusion cellulaire (29) est crypté au niveau application entre le module d'identification d'abonné SIM et le serveur de sélection de réseau (24).

6. Système pour mettre en oeuvre le procédé pour commander ponctuellement la sélection de réseau dans une zone couverte par au moins deux réseaux de communication mobile selon les revendications 1 à 5, **caractérisé en ce que** des dispositifs des deux réseaux de communication mobile (1, 2) sont reliés au moins temporairement à au moins un dispositif de stockage (7) destiné à stocker des données propres aux abonnés, étant précisé qu'il est prévu des moyens pour commander de manière ciblée des parties au moins de l'un au moins des réseaux de communication mobile (1 ou 2), et que ces moyens de commande font partie d'un opérateur de réseau virtuel VNO (6) ou sont fournis par celui-ci et comprennent des messages de diffusion cellulaire (29) déclenchés par le VNO (6).

7. Système selon la revendication 6, **caractérisé en ce que** le dispositif de stockage est constitué par un enregistreur de localisation nominal HLR (7) de l'opérateur de réseau virtuel (6).
